# EUROPEAN PATENT SPECIFICATION

(11) **EP 3 318 059 B1**
(45) Date of publication and mention of the grant of the patent: **12.04.2023**
(21) Application number: 17821348.4
(22) Date of filing: 30.06.2017
(51) Int. Cl.: H04N 13/20, G06T 3/40, H04N 5/232, H04N 13/189, H04N 13/128, H04N 13/106, H04N 13/239

(54) **STEREOSCOPIC IMAGE CAPTURE**
STEREOSKOPISCHE BILDERFASSUNG
CAPTURE D'IMAGE STÉRÉOSCOPIQUE

(30) Priority: 01.07.2016 US 201662357918 P
(43) Date of publication of application: 09.05.2018
(73) Proprietor: Meta Platforms, Inc., Menlo Park, CA 94025 (US)
(72) Inventor: COHEN, Michael, F., Menlo Park, CA 94025 (US); SZELISKI, Richard, Menlo Park, CA 94025 (US); EVANS, Bryce, Alan, Menlo Park, CA 94025 (US); KOPF, Johannes, Peter, Menlo Park, CA 94025 (US)
(74) Representative: Murgitroyd & Company
(86) International application number: PCT/US2017/040266
(87) International publication number: WO 2018/005953

(56) References cited:
- EP-A2- 1 235 439
- US-A1- 2007 126 863
- US-A1- 2012 105 574
- US-A1- 2012 154 548
- US-A1- 2012 154 548
- US-A1- 2015 321 103
- US-A1- 2015 321 103
- US-A1- 2015 341 617
- US-A1- 2015 373 266

## Description

### BACKGROUND

This disclosure generally relates to virtual reality systems, and more specifically to a method and system for capturing full-stereo 360-degree images for presentation by a virtual reality system.

An increasing number of devices allow viewing of full-spherical 360 by 180-degree content, such as virtual reality content. However, it remains difficult to capture full stereoscopic ("stereo") 360 by 180-degree video for subsequent presentation. Existing and announced devices and techniques for capturing full stereo 360-degree video have significant hardware costs and processing time, making capture of full stereo video impractical for many applications.

US 2012/0154548 A1 discloses a method for capturing image data from three or more image sensors, and for processing the captured image data into left view of a panorama taken from each image sensor and right views taken of the panorama from each image sensor. In the example embodiment, a catadioptric chassis assembly includes three catadioptric image sensors. Each catadioptric image sensor is mounted together in a chassis to maintain the image sensors in a fixed relation to each other. Once catadioptric images of the panorama are captured by each of the image sensors, the images are warped into cylindrical images. Thereafter, the images from the different image sensors may be spatially calibrated to each other. This may be done by identifying key-points or cues, common to each of the different images, and then minimizing a vertical disparity of common cues between images.

US 2015/0373266 A1 discloses a camera system including a support structure, a first image capture device, a second image capture device, a lens system, and an image processing unit. The lens system is coupled to focus a first image on an array of photosensors of the first image capture device and to focus a second image on the second array of photosensors of the second image capture device. The image processing data is operative to generate image data representing a single image by combining the image data received from the first image capture device and the image data received from the second image capture device along long edges of the first and second image. Image data is transferred out of the array of photosensors by simultaneously transferring data from a plurality of photosensors of the same row. Because the rows are arranged along a tilted, vertical direction, the image processing system includes an image rotation module.

EP 1 235 439 A2 discloses a method of rectifying a stereoscopic image pair of planar images when the true camera parameters are not known.

### SUMMARY

The invention is defined in claims 1 and 7. The dependent claims define advantageous embodiments.

### BRI EF DESCRI PTI ON OF THE DRAWl NGS

FIG. 1 is an example system for capturing stereo images, in accordance with an embodiment.
FIG. 2 shows an example of misalignment between the image capture device and the additional image capture device, in accordance with an embodiment.
FIG. 3 an example imaging geometry for points along a circle on a ground plane, in accordance with an embodiment.
FIG. 4 shows changes in horizontal disparity and changes in vertical disparity along a plane at a specific downward angle from a horizontal plane including the image capture device and the additional image capture device, in accordance with an embodiment.
FIG. 5 shows a range of horizontal azimuth angles where an image captured by an image capture device includes an additional image capture device, in accordance with an embodiment.
FIG. 6 is a conceptual diagram of correcting horizontal disparity from an image captured by the image capture device to generate a modified image, in accordance with an embodiment.

The figures depict various embodiments of the present invention for purposes of illustration only. One skilled in the art will readily recognize from the following discussion that alternative embodiments of the structures and methods illustrated herein may be employed without departing from the principles of the invention described herein.

### DETAILED DESCRIPTION

### System Architecture

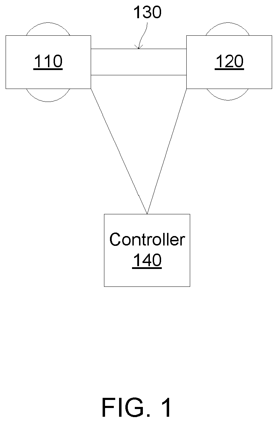

FIG. 1 shows an example system 100 comprising an image capture device 110 and an additional image capture device 120. In various embodiments, the image capture device 110 and the additional image capture device 120 are cameras, video cameras, or other devices configured to capture image data. While FIG. 1 shows a system 100 including two image capture devices, in other embodiments, the system 100 may include a greater number of image capture devices (e.g., 4 image capture devices, 8 image capture devices, etc.).

As shown by FIG. 1, the image capture device 110 and the additional image capture device 120 are each coupled to a connecting member 130 so the image capture device 110 and the additional image capture device 120 are in a common plane parallel to the connecting member 130. Both the image capture device 110 and the additional image capture device 120 include multiple wide angle or fisheye lenses that together cover the full 360 degree field of view of the image capture device 110 and of the additional image capture device 120.

Images captured by the image capture device 110 and by the additional image capture device 120 are communicated to a controller 140 that combines an image from the image capture device 110 and an additional image from the additional image capture device 120 into an equirectangular image. As further described below, the controller 140 is also configured to process images from the image capture device 110 and from the image capture device 120 when combining an image from the image capture device 110 with an image from the additional image capture device 120. Processing of an image from the image capture device 110 and an additional image from the additional image capture device 120 by the controller 140 may include one or more of: geometrically and photometrically aligning the image and the additional image, removing vertical parallax between the image and the additional image, and equalizing horizontal disparity between the image and the additional image. Additionally, processing by the controller 140 may exchange regions of the image and the additional image, e.g., to account for reversal of a user's eyes when looking backwards or to remove the image capture device 110 and the additional image capture device 120 from the additional image and from the image, respectively.

### Geometric Alignment

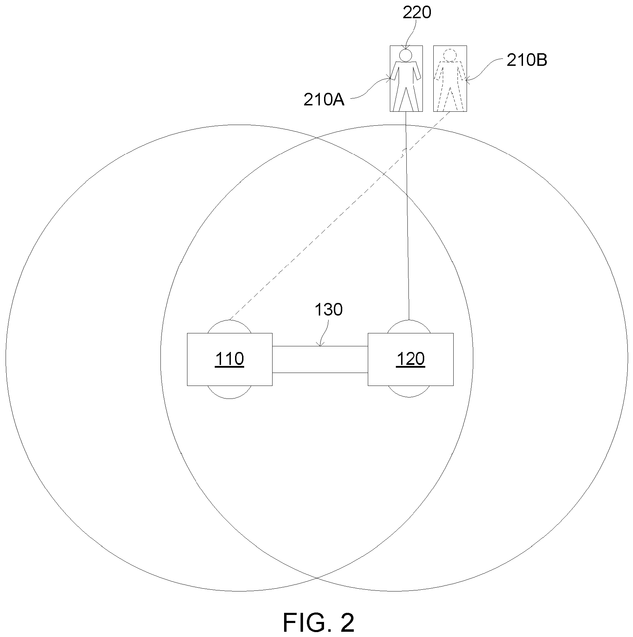

Misalignment where the image capture device 110 or the additional image capture device 120 are in different planes (e.g., misalignment in coupling the image capture device 110 and the additional image capture device 120 to the connecting member 130) or misalignment in the image capture device 110 or in the additional image capture device 120 themselves makes stereo viewing of images captured by the image capture device 110 and by the additional image capture device 120 difficult. Relatively small misalignment in the image capture device 110 or in the additional image capture device 120 makes stereo viewing of a combination of an image from the image capture device 110 and an additional image from the additional image capture device 120 difficult. FIG. 2 shows an example of misalignment between the image capture device 110 and the additional image capture device 120. In the example of FIG. 2, misalignment between the image capture device 110 and the additional image capture device 120 causes a position 210A of an object 220 in an image captured by the image capture device 110 to differ from a position 210B of the object 220 in an additional image captured by the additional image capture device 120. To compensate for this misalignment, the controller 140 determines a rotation to apply to the image captured by the image capture device 110 so a rotated version of the image captured by the image capture device 110 is in a parallel coordinate system with the additional image captured by the additional image capture device 120. For example, if the image capture device 110 is a camera positioned on the left of the connecting member 130 and the additional image capture device 120 is an additional camera positioned on the right of the connecting member 130, the controller 140 determines a rotation to be applied to the image captured by the camera positioned on the left of the connecting member 130 so an image captured by the camera positioned on the left of the connecting member 130 (i.e., the image capture device 110) is in a parallel coordinate system with an image captured by the camera positioned on the right of the connecting member 130 (i.e., the additional image capture device 120). In other embodiments, the controller 140 determines a rotation to be applied to the additional image captured by the additional image capture device 120, and rotates the additional image so a rotated version of the additional image is in a parallel coordinate system with the image captured by the image capture device 110.

To determine the rotation to be applied to the image (or to the additional image), the controller 140 maps the image into a cubemap and maps the additional image into an additional cubemap. For example, the image and the additional image are equirectangular images, and the controller 140 maps the equirectangular image into a cubemap and maps the equirectangular additional image into an additional cubemap. Mapping the image and the additional image into a cubemap and an additional cubemap, respectively, reduces local distortion.

The controller 140 subsequently identifies features, such as Harris Corners, from the cubemap, which corresponds to the image from the image capture device 110, and determines locations in the additional cubemap, which corresponds to the additional image from the additional image capture device 120, corresponding to the identified features from the cubemap. For example, the controller 140 identifies a location in the additional cubemap within a threshold distance of a location in the cubemap of a feature identified from the cubemap by performing a coarse to fine Lucas-Kanade search, or by performing any other suitable search. Based on locations of features identified in the cubemap and corresponding locations in the additional cubemap (determined using any suitable search), the controller 140 determines a transformation, which includes one or more of a rotation and a translation, explaining a maximum amount (e.g., a maximum number, a maximum percentage) of locations of features in the identified cubemap and their corresponding locations in the additional cubemap. For example, the controller 140 uses RANSAC to identify the transformation explaining the maximum amount of locations of features in the identified cubemap and their corresponding locations in the additional cubemap. When the identified transformation includes a translation, the controller 140 discards the translation from the identified transformation and applies the rotation from the identified transformation to the image from the image capture device 110, causing the rotated image from the image capture device 110 to align with the additional image from the additional image capture device 120. In other embodiments, the controller 140 similarly determines a translation and/or rotation applied to the additional image rather than applied to the image.

### Photometric Alignment

Exposure differences or unequal responses by the image capture device 110 and the additional image capture device 120 cause the image capture device 110 and additional image capture device 120 to capture an image of a scene and an additional image of a scene, respectively, having different exposures or gains. After geometrically aligning the image and the additional image as further described above, the controller 140 blurs the image and the additional image with a low-pass filter, such as a 255 pixel wide low pass filter, which mitigates small effects from disparities and from remaining geometric misalignments. The controller 140 then modifies each color channel of the image captured by the image capture device 110 by multiplying each color channel of each pixel by a ratio of that color channel in the filtered image to the same color channel in the filtered additional image. In embodiments where the controller 140 rotates the additional image rather than the image, the controller 140 modifies each color channel of the additional image captured by the additional image capture device 120 by multiplying each pixel in a color channel by a ratio of the filtered additional image in the color channel to the filtered image in the color channel. Correcting Horizontal and Vertical Disparity

After geometrically aligning the image from the image capture device 110 and the additional image from the additional image capture device 120, horizontal and vertical disparity remains between the image and the additional image because of the offset between the image capture device 110 and the additional image capture device 120. Horizontal or vertical disparity between the image and the additional image is inversely proportional to a distance from the image capture device 110 or the additional image capture device 120 to a point in the scene imaged by the image capture device 110 or the additional image capture device 120 and the apparent interocular distance between the image capture device 110 and the additional image capture device 120. The apparent interocular distance changes with a cosine of a horizontal azimuth angle away from a normal to a line between the image capture device 110 and the additional image capture device 120. The apparent interocular distance also varies with a vertical altitude angle above or below the horizon.

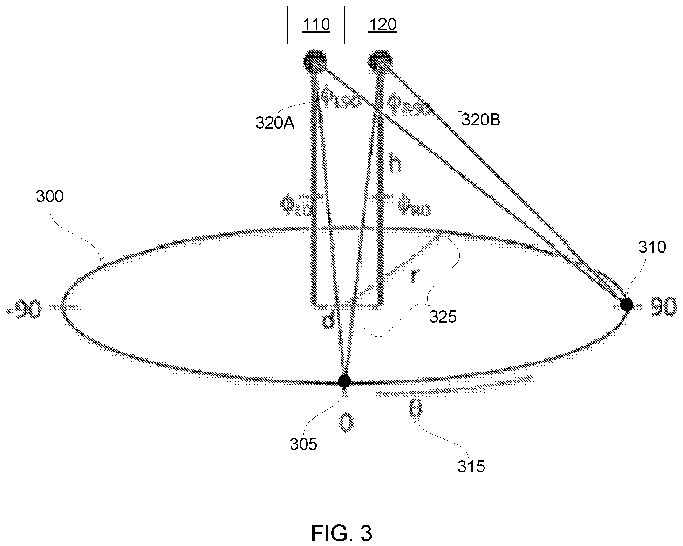

FIG. 3 shows an example imaging geometry for points along a circle 300 on a ground plane. As shown in FIG. 3, images of a point 305 directly in front of the image capture device 110 and the additional image capture device 120 have no vertical disparity, as a focal length of the image capture device 110 equals a focal length of the additional image capture device 120 for the point 305. However, the example of FIG. 3 shows a point 310 on the circle 300 at a horizontal azimuth angle 315 of 90 degrees lying on a vertical plane through a line connecting the image capture device 110 and the additional image capture device 120 where focal lengths of the image capture device 110 and of the additional image capture device 120 differ. Further, FIG. 3 shows an example where, at a vertical altitude angle of 45 degrees, if a radius 325 of the circle 300 equals a height of the image capture device 110 and a height of the additional image capture device 120 above the ground plane including the circle 300, a vertical altitude angle 320A of the image capture device 110 and a vertical altitude angle 320B differ by slightly more than 1 degree, causing vertical disparity between the image and the additional image that a user's eyes is unable to bring into alignment.

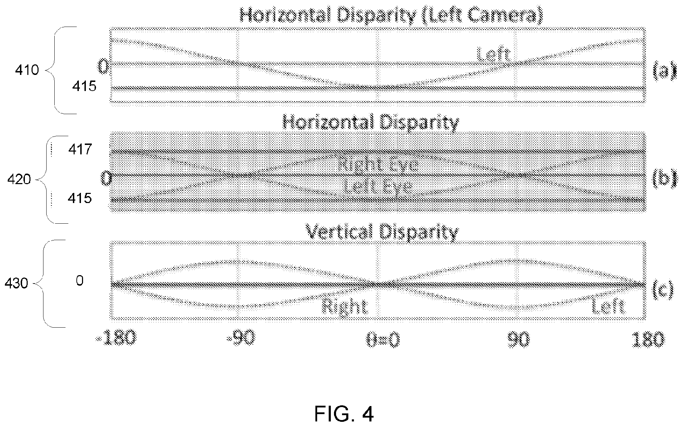

FIG. 4 shows changes in horizontal disparity 410 of the image capture device 110 along a plane at a specific downward angle from a horizontal plane including the image capture device 110, changes in horizontal disparity 420 of the image capture device 110 and of the additional image capture device 120 along a plane at a specific downward angle from a horizontal plane including the image capture device 110 and the additional image capture device 120, and changes in vertical disparity 430 of the image capture device 110 and of the additional image capture device 120 along a plane at a specific downward angle from a horizontal plane including the image capture device 110 and the additional image capture device 120. Having horizontal disparity remain at a constant value for a fixed depth allows users to more readily obtain depth cues from the horizontal disparity. As shown in FIG. 4, for a specific altitude angle, the horizontal disparity has a desired value 415 at points directly in front of the image capture device 110 and the additional image capture device 120, falls to zero at 90 degrees to the left and right of the image capture device 110 and of the additional image capture device 120, and has an inverse 417 of the desired value 415 at points directly behind a reference plane of the image capture device 110 and the additional image capture device 120.

To have the desired value 415 of horizontal disparity for locations behind the image capture device 110 and behind the additional image capture device 120, the controller 140 exchanges portions of the image captured by the image capture device 110 with portions of the additional image captured by the additional image capture device 120. As shown in FIG. 4, for locations behind the image capture device 110, the horizontal disparity is the inverse 417 of the desired value 415 for the image capture device 110. The horizontal disparity of images of locations in front of the reference plane of the additional image capture device 120 is also the inverse of the desired value for the image capture device 120. Accordingly, the horizontal disparity of images of locations behind the reference plane of the additional image capture device 120 have the desired value 415 of the horizontal disparity of the image capture device 110, so exchanging images of locations behind the reference plane of the image capture device 110 with additional images of locations behind the reference plane of the additional image capture device 120 causes the images of locations behind the reference plane of the image capture device 110 to have the desired value 415 of horizontal disparity for the image capture device 110, or to more closely approximate the desired value of horizontal disparity for the image capture device 110. The preceding exchange also causes the images of locations behind the reference plane of the additional image capture device 120 to have the desired value of horizontal disparity for the additional image capture device 120, or to more closely approximate the desired value of horizontal disparity for the additional image capture device 120.

The controller 140 may further correct horizontal and vertical disparity between the image from the image capture device 110 and the additional image from the additional image capture device 120 by computing dense optical flow from the image to the additional image and from the additional image to the image. To flow the image and the additional image without leaving gaps, the controller 140 iteratively searches for flow vectors to each pixel in the image and in the additional image (i.e., performing flow mapping from destination to source). In various embodiments, optical flow is determined for the image and for the additional image; hence, after determining how far to flow each pixel, the controller 140 modifies the image and the additional image using a half-length flow.

To further correct for horizontal disparity between an image from the image capture device 110 and an additional image from the additional image capture device 120, for a specific depth, the controller 140 initially flows the image to increase the horizontal disparity by a factor that is a ratio of a constant to an absolute value of cosine of a horizontal azimuth angle away from a normal to a line between the image capture device 110 and the additional image capture device 120 for different locations at the specific depth. For example, if θ represents the horizontal azimuth angle away from a normal to a line between the image capture device 110 and the additional image capture device 120, the controller 140 flows the image to increase the horizontal disparity between the image and the additional image by a factor of 1/|cos(θ)|. After increasing the horizontal disparity, the controller 140 exchanges portions of the image corresponding to locations behind the reference plane of the image capture device 110 with portions of the additional image corresponding to locations behind the reference plane of the additional image capture device 120. The controller 140 may perform similar operations on the additional image to correct for horizontal disparity between the image and the additional image.

To offset vertical distortion between the image and the additional image, the controller 140 divides the vertical components of the optical flow maps for the image and for the additional image in half. The controller 140 uses the half of the optical flow map for the image when searching for flow vectors to pixels in the image. Similarly, the controller 140 uses the reverse of half of the optical flow map for the additional image when searching for flow vectors to pixels in the additional image. Such compensation for vertical distortion may reduce eyestrain in users subsequently viewing stereoscopic content from the image and the additional image when looking towards the ground of the content, while also making areas of the stereoscopic content closer to the horizon with smaller vertical disparity easier to view.

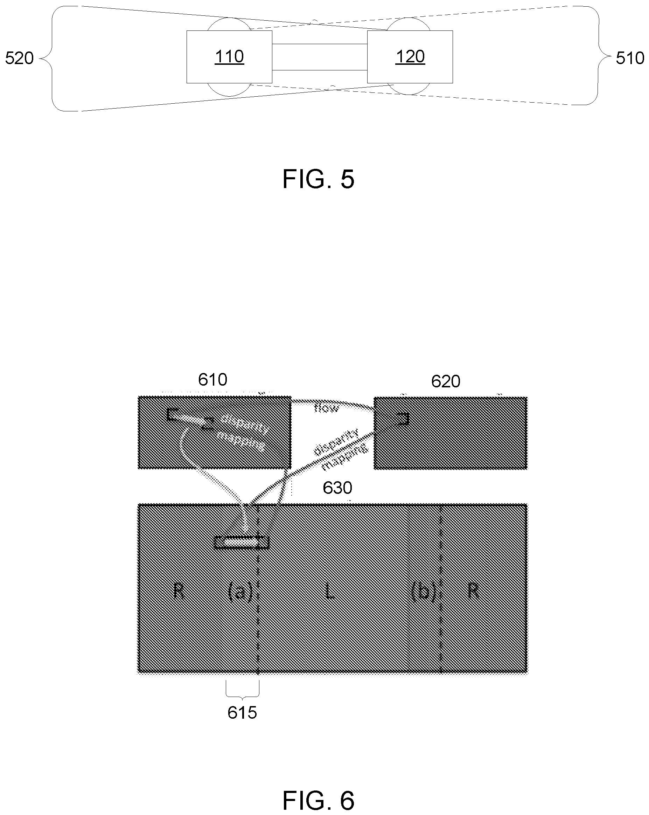

At regions where the horizontal azimuth angle away from a normal to the line between the image capture device 110 and the additional image capture device 120 is approximately 90 degrees or -90 degrees, images captured by the image capture device 110 include the additional image capture device 120 or images captured by the additional image capture device 120 include the image capture device 110. Further, at regions where the horizontal azimuth angle away from a normal to a line between the image capture device 110 and the additional image capture device 120 is approximately 90 degrees or -90 degrees, horizontal disparity falls to zero (although the factor based on the ratio of a constant to the cosine of the horizontal azimuth angle away from the normal to the line between the image capture device 110 and the additional image capture device 120 tends toward infinity to compensate for the decrease in horizontal disparity). FIG. 5 shows a range 510 of horizontal azimuth angles away from a normal to the line between the image capture device 110 and the additional image capture device 120 where images captured by the image capture device 110 include the additional image capture device 120. Similarly, FIG. 5 also shows an additional range 520 of horizontal azimuth angles away from a normal to the line between the image capture device 110 and the additional image capture device 120 where images captured by the additional image capture device 120 include the image capture device 110.

To compensate for both of the above, the controller 140 replaces image data captured by the additional image capture device 120 with image data captured by the image capture device 110 for a region where the horizontal azimuth angle away from the normal to the line between the image capture device 110 and the additional image capture device 120 is within a range. For example, the controller 140 replaces image data captured by the additional image capture device 120 with image data captured by the image capture device 110 where the horizontal azimuth angle away from the normal to the line between the image capture device 110 and the additional image capture device 120 is greater than -100 degrees and less than -80 degrees. Similarly, for a region where the horizontal azimuth angle away from the normal to the line between the image capture device 110 and the additional image capture device 120 is within an alternative range, the controller 140 replaces image data captured by the image capture device 110 with image data captured by the additional image capture device 120. For example, the controller 140 replaces image data captured by the image capture device 110 with image data captured by the additional image capture device 120 where the horizontal azimuth angle away from the normal to the line between the image capture device 110 and the additional image capture device 120 is greater than 80 degrees and less than 100 degrees. Additionally, the controller 140 may linearly interpolate horizontal disparities across the region where the horizontal azimuth angle away from the normal to the line between the image capture device 110 and the additional image capture device 120 is within the range (e.g., greater than -100 degrees and less than -80 degrees) by sampling values of the horizontal disparity at locations where the horizontal azimuth angle is a threshold amount outside of the range (e.g., less than -100 degrees by a threshold amount and greater than -80 degrees by the threshold amount). Similarly, the controller 140 linearly interpolates horizontal disparities across the region where the horizontal azimuth angle away from the normal to the line between the image capture device 110 and the additional image capture device 120 is within the alternative range (e.g., greater than 80 degrees and less than 100 degrees) by sampling values of the horizontal disparity at locations where the horizontal azimuth angle is the threshold amount outside of the range (e.g., less than 80 degrees by the threshold amount and greater than 100 degrees by the threshold amount).

FIG. 6 is a conceptual diagram of correcting horizontal disparity and removing the additional image capture device 120 from an image 610 captured by the image capture device 110 to generate a modified image 630. In the example of FIG. 6, region 615 in the modified image 630 corresponds to a range of the horizontal azimuth angle away from the normal to the line between the image capture device 110 and the additional image capture device 120 between -80 and -100 degrees, so the controller 140 generates the modified image 630 by replacing image data captured by the additional image capture device 120 for the horizontal azimuth angle between -80 and -100 with image data captured by the image capture device 110.

To generate the modified image, the controller 140 identifies a starting location in the additional image 620 captured by the additional image capture device 120 that corresponds to a location in the modified image 630 having a horizontal azimuth angle a specified amount less than -100 degrees by inverting the previously described disparity mapping to look up the corresponding flow at that location. The controller 140 then determines a location in the image 610 corresponding to the identified location in the additional image 620 using an optical flow map from the additional image 620 to the image 610, as further described above. Additionally, the controller 140 identifies an ending location in the image 610 that corresponds to an additional location in the modified image 630 with a horizontal azimuth angle a specified amount greater than -80 degrees by inverting the previously described disparity mapping. The controller 140 subsequently resamples pixels between the location in the image 610 corresponding to the identified location in the additional image 620 and the ending location in the image 610 and fills pixels in the modified image 630 along a line between the location in the modified image 630 and the additional location in the modified image 630.

In other embodiments, the controller 140 compensates for horizontal and vertical disparity by transforming an image from the image capture device 110 and an additional image from the additional image capture device 120 into a "transverse equirect" format where epipolar curves indicating how pixels move between the image and the additional image based on depth are mapped to form horizontal lines. In the transverse equirect format, the controller 140 applies one or more stereo matching methods to the image and the additional image. In some embodiments, the controller 140 also applies a weighted push-pull algorithm with weights equal to the stereo matching confidence, resulting in inverse depth. Alternatively, the controller 140 receives the image and the additional image in an equirect format and converts the image and the additional image into cubemap representations.

### Summary

The foregoing description of the embodiments has been presented for the purpose of illustration; it is not intended to be exhaustive or to limit the patent rights to the precise forms disclosed. Persons skilled in the relevant art can appreciate that many modifications and variations are possible in light of the above disclosure.

Some portions of this description describe the embodiments in terms of algorithms and symbolic representations of operations on information. These algorithmic descriptions and representations are commonly used by those skilled in the data processing arts to convey the substance of their work effectively to others skilled in the art. These operations, while described functionally, computationally, or logically, are understood to be implemented by computer programs or equivalent electrical circuits, microcode, or the like. Furthermore, it has also proven convenient at times, to refer to these arrangements of operations as modules, without loss of generality. The described operations and their associated modules may be embodied in software, firmware, hardware, or any combinations thereof.

Any of the steps, operations, or processes described herein may be performed or implemented with one or more hardware or software modules, alone or in combination with other devices. In one embodiment, a software module is implemented with a computer program product comprising a computer-readable medium containing computer program code, which can be executed by a computer processor for performing any or all of the steps, operations, or processes described.

Embodiments may also relate to an apparatus for performing the operations herein. This apparatus may be specially constructed for the required purposes, and/or it may comprise a general-purpose computing device selectively activated or reconfigured by a computer program stored in the computer. Such a computer program may be stored in a non-transitory, tangible computer readable storage medium, or any type of media suitable for storing electronic instructions, which may be coupled to a computer system bus. Furthermore, any computing systems referred to in the specification may include a single processor or may be architectures employing multiple processor designs for increased computing capability.

Embodiments of the invention may also relate to a product that is produced by a computing process described herein. Such a product may comprise information resulting from a computing process, where the information is stored on a non-transitory, tangible computer readable storage medium and may include any embodiment of a computer program product or other data combination described herein.

Finally, the language used in the specification has been principally selected for readability and instructional purposes, and it may not have been selected to delineate or circumscribe the inventive subject matter. It is therefore intended that the scope of the patent rights be limited not by this detailed description, but rather by any claims that issue on an application based hereon. Accordingly, the disclosure of the embodiments is intended to be illustrative, but not limiting, of the scope of the patent rights identified by claims that issue on an application that is based on the preceding disclosure.

## Claims

1. A system comprising:
a first image capture device (110) coupled to a connecting member (130), the first image capture device (110) configured to capture images of a 360 degree field of view surrounding the first image capture device (110);
a second image capture device (120) coupled to the connecting member (130) so the first image capture device (110) and the second image capture device (120) are in a common plane parallel to the connecting member (130), the second image capture device (120) configured to capture images of a 360 field of view surrounding the second image capture device (120); and
a controller (140) coupled to the first image capture device (110) and to the second image capture device (120), the controller (140) configured to:
receive images captured by the first image capture device (110);
receive additional images captured by the second image capture device (120);
align images captured by the first image capture device (110) with additional images captured by the second image capture device (120), wherein align images captured by the first image capture device (110) with additional images captured by the second image capture device (120) comprises:
determine a rotation to be applied to an image captured by the first image capture device (110) so the image is in a parallel coordinate system with an additional image captured by the second image capture device (120), wherein determine the rotation to be applied to the image captured by the first image capture device (110) comprises:
map the image into a cubemap;
map the additional image into an additional cubemap;
identify features within the cubemap and locations within the cubemap corresponding to each of the identified features;
determine locations in the additional cubemap corresponding to each of the identified features within the cubemap; and
determine a transformation explaining a maximum amount of locations of features within the cubemap and their corresponding locations in the additional cubemap; and
rotate the additional image so a rotated version of the additional image is in the parallel coordinate system with the image by applying the rotation to the additional image;
equalize horizontal disparity (410,420) between the aligned images captured by the first image capture device (110) and the additional images captured by the second image capture device (120); and
generate one or more equirectangular images by combining the equalized aligned images and the equalized aligned additional images.

2. The system of claim 1, wherein the transformation includes the rotation and a translation, and wherein determine the rotation to be applied to the image captured by the first image capture device (110) further comprises:
extract the rotation from the transformation and discard the translation of the transformation.

3. The system of claim 1, wherein align the image captured by the first image capture device (110) with the additional image captured by the second image capture device (120) further comprises:
blur the image and the rotated version of the additional image with a low-pass filter.

4. The system of claim 1, wherein equalize horizontal disparity (410,420) between the images captured by the first image capture device (110) and the additional images captured by the second image capture device (120) comprises:
identify an image captured by the first image capture device (110) of a location behind a reference plane including the first image capture device (110) and the second image capture device (120);
identify an additional image captured by the second image capture device (120) of the location behind the reference plane; and
exchange the image and the additional image.

5. The system of claim 1, wherein equalize horizontal disparity (410,420) between the images captured by the first image capture device (110) and the additional images captured by the second image capture device (120) comprises:
compute dense optical flow from one or more images captured by the first image capture device (110) to one or more additional images captured by the second image capture device (120) and from the one or more additional images captured by the second image capture device (120) to the one or more images captured by the first image capture device (110); and
modify the one or more images and the one or more additional images based on the computed dense optical flow;
optionally wherein modifying the one or more images and the one or more additional images based on the computed dense optical flow comprises:
flow an image captured by the first image capture device (110) based on the computed dense optical flow to increase a horizontal disparity (410,420) between the image and an additional image by a factor that is a ratio of a constant to an absolute value of a cosine of a horizontal azimuth angle away from a normal to a line between the first image capture device (110) and the second image capture device (120) for different locations at a specific depth relative to the first image capture device (110); and
exchange portions of the image corresponding to locations behind a reference plane including the first image capture device (110) and the second image capture device (120) with portions of the additional image corresponding to locations behind the reference plane.

6. The system of claim 1, wherein generate one or more equirectangular images by combining the equalized aligned images and the equalized aligned additional images comprises:
remove the second image capture device (120) from an image captured by the first image capture device (110);
optionally wherein remove the second image capture device (120) from an image captured by the first image capture device (110) comprises:
identify a starting location within an additional image captured by the first image capture device (110) corresponding to a location in the image within a specific range of horizontal azimuth angles away from a normal to a line between the first image capture device (110) and the second image capture device (120) and perpendicular to the first image capture device (110) and the second image capture device (120);
determining a location in the image captured by the first image capture device (110) corresponding to the starting location within the additional image;
determining an ending location in the image captured by the first image capture device (110) having a horizontal azimuth angle away from the normal to the line between the first image capture device (110) and the second image capture device (120) and perpendicular to the first image capture device (110) and the second image capture device (120) within the specific range; and
modifying the image by resampling pixels between the location in the image and the ending location in the image and filling pixels along a line in the image between the location and the ending location based on the resampling; and/or
optionally wherein remove the second image capture device (120) from the image captured by the first image capture device (110) comprises:
replace a portion of the image captured by the first image capture device (110) having horizontal azimuth angles away from a normal to a line between the first image capture device (110) and the second image capture device (120) and
perpendicular to the first image capture device (110) and the second image capture device (120) within a specific range with a portion of an additional image having horizontal azimuth angles away from a normal to a line between the first image capture device (110) and the second image capture device (120) and perpendicular to the first image capture device (110) and the second image capture device (120) within the specific range.

7. A method comprising:
receiving images from a first image capture device (110)coupled to a connecting member (130), the images describing a 360 degree field of view surrounding the first image capture device (110);
receiving additional images from a second image capture device (120) coupled to the connecting member (130) so the first image capture device (110) and the second image capture device (120) are in a common plane parallel to the connecting member (130), the additional images describing a 360 field of view surrounding the second image capture device (120);
aligning images received from the first image capture device (110) with additional images received from the second image capture device (120) wherein aligning images received from the first image capture device (110) with additional images received from the second image capture device (120) comprises:
determining a rotation to be applied to an image received from the first image capture device (110) so the image is in a parallel coordinate system with an additional image received from the second image capture device (120), wherein determine the rotation to be applied to the image captured by the first image capture device (110) comprises:
map the image into a cubemap;
map the additional image into an additional cubemap;
identify features within the cubemap and locations within the cubemap corresponding to each of the identified features;
determine locations in the additional cubemap corresponding to each of the identified features within the cubemap; and
determine a transformation explaining a maximum amount of locations of features within the cubemap and their corresponding locations in the additional cubemap; and
rotating the additional image so a rotated version of the additional image is in the parallel coordinate system with the image by applying the rotation to the additional image;
equalizing horizontal disparity (410,420) between the aligned images received from the first image capture device (110) and the additional images received from the second image capture device (120); and
generating one or more equirectangular images by combining the equalized aligned images and the equalized aligned additional images.

8. The method of claim 7, wherein the transformation includes the rotation and a translation, and wherein determining the rotation to be applied to the image received from the first image capture device (110) further comprises:
extracting the rotation from the transformation and discarding the translation of the transformation.

9. The method of claim 7, wherein aligning the image received from the first image capture device (110) with the additional image received from the second image capture device (120) further comprises:
blurring the image and the rotated version of the additional image with a low-pass filter.

10. The method of claim 7, wherein equalizing horizontal disparity (410,420) between the images received from the first image capture device (110) and the additional images received from the second image capture device (120) comprises:
identifying an image of a location behind a reference plane including the first image capture device (110) and the second image capture device (120) received from the first image capture device (110);
identifying an additional image of the location behind the reference plane received from the second image capture device (120); and
exchanging the image and the additional image.

11. The method of claim 7, wherein equalizing horizontal disparity (410,420) between the images received from the first image capture device (110) and the additional images received from the second image capture device (120) comprises:
computing dense optical flow from one or more images received from the first image capture device (110) to one or more additional images received from the second image capture device (120) and from the one or more additional images received from the second image capture device (120) to the one or more images received from the first image capture device (110); and
modifying the one or more images and the one or more additional images based on the computed dense optical flow;
optionally wherein modifying the one or more images and the one or more additional images based on the computed dense optical flow comprises:
flowing an image received from the first image capture device (110) based on the computed dense optical flow to increase a horizontal disparity (410,420) between the image and an additional image by a factor that is a ratio of a constant to an absolute value of a cosine of a horizontal azimuth angle away from a normal to a line between the first image capture device (110) and the second image capture device (120) for different locations at a specific depth relative to the image capture device; and
exchanging portions of the image corresponding to locations behind a reference plane including the first image capture device (110) and the second image capture device (120) with portions of the additional image corresponding to locations behind the reference plane.

12. The method of claim 7, wherein generating one or more equirectangular images by combining the equalized aligned images and the equalized aligned additional images comprises:
removing the second image capture device (120) from an image captured by the first image capture device (110);
optionally wherein removing the second image capture device (120) from the image captured by the first image capture device (110) comprises:
replacing a portion of the image captured by the first image capture device (110) having horizontal azimuth angles away from a normal to a line between the first image capture device (110) and the second image capture device (120) and
perpendicular to the first image capture device (110) and the second image capture device (120) within a specific range with a portion of an additional image having horizontal azimuth angles away from a normal to a line between the first image capture device (110) and the second image capture device (120) and perpendicular to the first image capture device (110) and the second image capture device (120) within the specific range.

## Patentansprüche

1. Ein System, das Folgendes beinhaltet:
eine erste Bilderfassungsvorrichtung (110), die mit einem Verbindungselement (130) gekoppelt ist, wobei die erste Bilderfassungsvorrichtung (110) konfiguriert ist, um Bilder eines 360-Grad-Sichtfelds, das die erste Bilderfassungsvorrichtung (110) umgibt, zu erfassen;
eine zweite Bilderfassungsvorrichtung (120), die mit dem Verbindungselement (130) so gekoppelt ist, dass sich die erste Bilderfassungsvorrichtung (110) und die zweite Bilderfassungsvorrichtung (120) parallel zu dem Verbindungselement (130) in einer gemeinsamen Ebene befinden, wobei die zweite Bilderfassungsvorrichtung (120) konfiguriert ist, um Bilder eines 360-Grad-Sichtfelds, das die zweite Bilderfassungsvorrichtung (120) umgibt, zu erfassen; und
eine Steuerung (140), die mit der ersten Bilderfassungsvorrichtung (110) und der zweiten Bilderfassungsvorrichtung (120) gekoppelt ist, wobei die Steuerung (140) für Folgendes konfiguriert ist:
Empfangen von Bildern, die durch die erste Bilderfassungsvorrichtung (110) erfasst werden;
Empfangen von zusätzlichen Bildern, die durch die zweite Bilderfassungsvorrichtung (120) erfasst werden;
Ausrichten von Bildern, die durch die erste Bilderfassungsvorrichtung (110) erfasst werden, mit zusätzlichen Bildern, die durch die zweite Bilderfassungsvorrichtung (120) erfasst werden, wobei das Ausrichten von Bildern, die durch die erste Bilderfassungsvorrichtung (110) erfasst werden, mit zusätzlichen Bildern, die durch die zweite Bilderfassungsvorrichtung (120) erfasst werden, Folgendes beinhaltet:
Bestimmen einer Rotation, die auf ein Bild angewendet werden soll, das durch die erste Bilderfassungsvorrichtung (110) erfasst wird, sodass sich das Bild mit einem zusätzlichen Bild, das durch die zweite Bilderfassungsvorrichtung (120) erfasst wird, in einem parallelen Koordinatensystem befindet, wobei das Bestimmen der Rotation, die auf das Bild angewendet werden soll, das durch die erste Bilderfassungsvorrichtung (110) erfasst wird, Folgendes beinhaltet:
Abbilden des Bilds in eine Cubemap;
Abbilden des zusätzlichen Bilds in eine zusätzliche Cubemap;
Identifizieren von Merkmalen innerhalb der Cubemap und Stellen innerhalb der Cubemap, die jedem der identifizierten Merkmale entsprechen;
Bestimmen von Stellen in der zusätzlichen Cubemap, die jedem der identifizierten Merkmale innerhalb der Cubemap entsprechen; und
Bestimmen einer Transformation, die eine maximale Menge an Stellen von Merkmalen innerhalb der Cubemap und ihre entsprechenden Stellen in der zusätzlichen Cubemap erklärt; und
Rotieren des zusätzlichen Bilds, sodass durch das Anwenden der Rotation auf das zusätzliche Bild eine rotierte Version des zusätzlichen Bilds mit dem Bild in dem parallelen Koordinatensystem ist;
Ausgleichen von horizontaler Disparität (410, 420) zwischen den ausgerichteten Bildern, die durch die erste Bilderfassungsvorrichtung (110) erfasst werden, und
den zusätzlichen Bildern, die durch die zweite Bilderfassungsvorrichtung (120) erfasst werden; und
Erzeugen eines oder mehrerer equirektangulärer Bilder durch das Kombinieren der ausgeglichenen ausgerichteten Bilder und der ausgeglichenen ausgerichteten zusätzlichen Bilder.

2. System gemäß Anspruch 1, wobei die Transformation die Rotation und eine Translation umfasst und wobei das Bestimmen der Rotation, die auf das Bild angewendet werden soll, das durch die erste Bilderfassungsvorrichtung (110) erfasst wird, ferner Folgendes beinhaltet:
Extrahieren der Rotation aus der Transformation und Verwerfen der Translation der Transformation.

3. System gemäß Anspruch 1, wobei das Ausrichten des Bilds, das durch die erste Bilderfassungsvorrichtung (110) erfasst wird, mit dem zusätzlichen Bild, das durch die zweite Bilderfassungsvorrichtung (120) erfasst wird, ferner Folgendes beinhaltet: Verwischen des Bilds und der rotierten Version des zusätzlichen Bilds mit einem Tiefpassfilter.

4. System gemäß Anspruch 1, wobei das Ausgleichen von horizontaler Disparität (410, 420) zwischen den Bildern, die durch die erste Bilderfassungsvorrichtung (110) erfasst werden, und den zusätzlichen Bildern, die durch die zweite Bilderfassungsvorrichtung (120) erfasst werden, Folgendes beinhaltet:
Identifizieren eines Bilds, das durch die erste Bilderfassungsvorrichtung (110) erfasst wird, einer Stelle hinter einer Bezugsebene, die die erste Bilderfassungsvorrichtung (110) und die zweite Bilderfassungsvorrichtung (120) umfasst;
Identifizieren eines zusätzlichen Bilds, das durch die zweite Bilderfassungsvorrichtung (120) erfasst wird, der Stelle hinter der Bezugsebene; und
Austauschen des Bilds und des zusätzlichen Bilds.

5. System gemäß Anspruch 1, wobei das Ausgleichen von horizontaler Disparität (410, 420) zwischen den Bildern, die durch die erste Bilderfassungsvorrichtung (110) erfasst werden, und den zusätzlichen Bildern, die durch die zweite Bilderfassungsvorrichtung (120) erfasst werden, Folgendes beinhaltet:
Berechnen von dichtem optischen Fluss von einem oder mehreren Bildern, die durch die erste Bilderfassungsvorrichtung (110) erfasst werden, zu einem oder mehreren zusätzlichen Bildern, die durch die zweite Bilderfassungsvorrichtung (120) erfasst werden, und von dem einen oder den mehreren zusätzlichen Bildern, die durch die zweite Bilderfassungsvorrichtung (120) erfasst werden, zu dem einen oder den mehreren Bildern, die durch die erste Bilderfassungsvorrichtung (110) erfasst werden; und
Modifizieren des einen oder der mehreren Bilder und des einen oder der mehreren zusätzlichen Bilder basierend auf dem berechneten dichten optischen Fluss;
wobei optional das Modifizieren des einen oder der mehreren Bilder und des einen oder der mehreren zusätzlichen Bilder basierend auf dem berechneten dichten optischen Fluss Folgendes beinhaltet:
Fließenlassen eines Bilds, das durch die erste Bilderfassungsvorrichtung (110) erfasst wird, basierend auf dem berechneten dichten optischen Fluss, um eine horizontale Disparität (410, 420) zwischen dem Bild und einem zusätzlichen Bild um einen Faktor zu erhöhen, der ein Verhältnis einer Konstante zu einem absoluten Wert eines Kosinus eines horizontalen Azimutwinkels weg von einer Normalen zu einer Linie zwischen der ersten Bilderfassungsvorrichtung (110) und der zweiten Bilderfassungsvorrichtung (120) ist, für unterschiedliche Stellen in einer spezifischen Tiefe relativ zu der ersten Bilderfassungsvorrichtung (110); und
Austauschen von Abschnitten des Bilds, die Stellen hinter einer Bezugsebene, die die erste Bilderfassungsvorrichtung (110) und die zweite Bilderfassungsvorrichtung (120) umfasst, entsprechen, gegen Abschnitte des zusätzlichen Bilds, die Stellen hinter der Bezugsebene entsprechen.

6. System gemäß Anspruch 1, wobei das Erzeugen eines oder mehrerer equirektangulärer Bilder durch das Kombinieren der ausgeglichenen ausgerichteten Bilder und der ausgeglichenen ausgerichteten zusätzlichen Bilder Folgendes beinhaltet:
Entfernen der zweiten Bilderfassungsvorrichtung (120) aus einem Bild, das durch die erste Bilderfassungsvorrichtung (110) erfasst wird;
wobei optional das Entfernen der zweiten Bilderfassungsvorrichtung (120) aus einem Bild, das durch die erste Bilderfassungsvorrichtung (110) erfasst wird, Folgendes beinhaltet:
Identifizieren einer Startstelle innerhalb eines zusätzlichen Bilds, das durch die erste Bilderfassungsvorrichtung (110) erfasst wird, die einer Stelle in dem Bild innerhalb eines spezifischen Bereichs horizontaler Azimutwinkel weg von einer Normalen zu einer Linie zwischen der ersten Bilderfassungsvorrichtung (110) und der zweiten Bilderfassungsvorrichtung (120) und senkrecht zu der ersten Bilderfassungsvorrichtung (110) und der zweiten Bilderfassungsvorrichtung (120) entspricht;
Bestimmen einer Stelle in dem Bild, das durch die erste Bilderfassungsvorrichtung (110) erfasst wird, die der Startstelle innerhalb des zusätzlichen Bilds entspricht;
Bestimmen einer Endstelle in dem Bild, das durch die erste Bilderfassungsvorrichtung (110) erfasst wird, die einen horizontalen Azimutwinkel weg von der Normalen zu der Linie zwischen der ersten Bilderfassungsvorrichtung (110) und der zweiten Bilderfassungsvorrichtung (120) und senkrecht zu der ersten Bilderfassungsvorrichtung (110) und der zweiten Bilderfassungsvorrichtung (120) innerhalb des spezifischen Bereichs aufweist; und
Modifizieren des Bilds durch das erneute Abtasten von Pixeln zwischen der Stelle in dem Bild und der Endstelle in dem Bild und Füllen von Pixeln entlang einer Linie in dem Bild zwischen der Stelle und der Endstelle basierend auf dem erneuten Abtasten;
und/oder
wobei optional das Entfernen der zweiten Bilderfassungsvorrichtung (120) aus dem Bild, das durch die erste Bilderfassungsvorrichtung (110) erfasst wird, Folgendes beinhaltet:
Ersetzen eines Abschnitts des Bilds, das durch die erste Bilderfassungsvorrichtung (110) erfasst wird, das horizontale Azimutwinkel weg von einer Normalen zu einer Linie zwischen der ersten Bilderfassungsvorrichtung (110) und der zweiten Bilderfassungsvorrichtung (120) und senkrecht zu der ersten Bilderfassungsvorrichtung (110) und der zweiten Bilderfassungsvorrichtung (120) innerhalb eines spezifischen Bereichs aufweist, durch einen Abschnitt eines zusätzlichen Bilds, das horizontale Azimutwinkel weg von einer Normalen zu einer Linie zwischen der ersten Bilderfassungsvorrichtung (110) und der zweiten Bilderfassungsvorrichtung (120) und senkrecht zu der ersten Bilderfassungsvorrichtung (110) und der zweiten Bilderfassungsvorrichtung (120) innerhalb des spezifischen Bereichs aufweist.

7. Ein Verfahren, das Folgendes beinhaltet:
Empfangen von Bildern von einer ersten Bilderfassungsvorrichtung (110), die mit einem Verbindungselement (130) gekoppelt ist, wobei die Bilder ein 360-Grad-Sichtfeld beschreiben, das die erste Bilderfassungsvorrichtung (110) umgibt;
Empfangen zusätzlicher Bilder von einer zweiten Bilderfassungsvorrichtung (120), die mit dem Verbindungselement (130) so gekoppelt ist, dass sich die erste Bilderfassungsvorrichtung (110) und die zweite Bilderfassungsvorrichtung (120) parallel zu dem Verbindungselement (130) in einer gemeinsamen Ebene befinden, wobei die zusätzlichen Bilder ein 360-Grad-Sichtfeld beschreiben, das die zweite Bilderfassungsvorrichtung (120) umgibt;
Ausrichten von Bildern, die von der ersten Bilderfassungsvorrichtung (110) empfangen werden, mit zusätzlichen Bildern, die von der zweiten Bilderfassungsvorrichtung (120) empfangen werden, wobei das Ausrichten von Bildern, die von der ersten Bilderfassungsvorrichtung (110) empfangen werden, mit zusätzlichen Bildern, die von der zweiten Bilderfassungsvorrichtung (120) empfangen werden, Folgendes beinhaltet:
Bestimmen einer Rotation, die auf ein Bild angewendet werden soll, das von der ersten Bilderfassungsvorrichtung (110) empfangen wird, sodass sich das Bild mit einem zusätzlichen Bild, das von der zweiten Bilderfassungsvorrichtung (120) empfangen wird, in einem parallelen Koordinatensystem befindet, wobei das Bestimmen der Rotation, die auf das Bild angewendet werden soll, das durch die erste Bilderfassungsvorrichtung (110) erfasst wird, Folgendes beinhaltet:
Abbilden des Bilds in eine Cubemap;
Abbilden des zusätzlichen Bilds in eine zusätzliche Cubemap;
Identifizieren von Merkmalen innerhalb der Cubemap und Stellen innerhalb der Cubemap, die jedem der identifizierten Merkmale entsprechen;
Bestimmen von Stellen in der zusätzlichen Cubemap, die jedem der identifizierten Merkmale innerhalb der Cubemap entsprechen; und
Bestimmen einer Transformation, die eine maximale Menge an Stellen von Merkmalen innerhalb der Cubemap und ihre entsprechenden Stellen in der
zusätzlichen Cubemap erklärt; und
Rotieren des zusätzlichen Bilds, sodass durch das Anwenden der Rotation auf das zusätzliche Bild eine rotierte Version des zusätzlichen Bilds mit dem Bild in
dem parallelen Koordinatensystem ist;
Ausgleichen von horizontaler Disparität (410, 420) zwischen den ausgerichteten Bildern, die von der ersten Bilderfassungsvorrichtung (110) empfangen werden, und
den zusätzlichen Bildern, die von der zweiten Bilderfassungsvorrichtung (120) empfangen werden; und
Erzeugen eines oder mehrerer equirektangulärer Bilder durch das Kombinieren der ausgeglichenen ausgerichteten Bilder und der ausgeglichenen ausgerichteten zusätzlichen Bilder.

8. Verfahren gemäß Anspruch 7, wobei die Transformation die Rotation und eine Translation umfasst und wobei das Bestimmen der Rotation, die auf das Bild angewendet werden soll, das von der ersten Bilderfassungsvorrichtung (110) empfangen wird, ferner Folgendes beinhaltet:
Extrahieren der Rotation aus der Transformation und Verwerfen der Translation der Transformation.

9. Verfahren gemäß Anspruch 7, wobei das Ausrichten des Bilds, das von der ersten Bilderfassungsvorrichtung (110) empfangen wird, mit dem zusätzlichen Bild, das von der zweiten Bilderfassungsvorrichtung (120) empfangen wird, ferner Folgendes beinhaltet:
Verwischen des Bilds und der rotierten Version des zusätzlichen Bilds mit einem Tiefpassfilter.

10. Verfahren gemäß Anspruch 7, wobei das Ausgleichen von horizontaler Disparität (410, 420) zwischen den Bildern, die von der ersten Bilderfassungsvorrichtung (110) empfangen werden, und den zusätzlichen Bildern, die von der zweiten Bilderfassungsvorrichtung (120) empfangen werden, Folgendes beinhaltet:
Identifizieren eines Bilds einer Stelle hinter einer Bezugsebene, die die erste Bilderfassungsvorrichtung (110) und die zweite Bilderfassungsvorrichtung (120) umfasst, das von der ersten Bilderfassungsvorrichtung (110) empfangen wird;
Identifizieren eines zusätzlichen Bilds der Stelle hinter der Bezugsebene, das von der zweiten Bilderfassungsvorrichtung (120) empfangen wird; und
Austauschen des Bilds und des zusätzlichen Bilds.

11. Verfahren gemäß Anspruch 7, wobei das Ausgleichen von horizontaler Disparität (410, 420) zwischen den Bildern, die von der ersten Bilderfassungsvorrichtung (110) empfangen werden, und den zusätzlichen Bildern, die von der zweiten Bilderfassungsvorrichtung (120) empfangen werden, Folgendes beinhaltet:
Berechnen von dichtem optischen Fluss von einem oder mehreren Bildern, die von der ersten Bilderfassungsvorrichtung (110) empfangen werden, zu einem oder mehreren zusätzlichen Bildern, die von der zweiten Bilderfassungsvorrichtung (120) empfangen werden, und von dem einen oder den mehreren zusätzlichen Bildern, die von der zweiten Bilderfassungsvorrichtung (120) empfangen werden, zu dem einen oder den mehreren Bildern, die von der ersten Bilderfassungsvorrichtung (110) empfangen werden; und
Modifizieren des einen oder der mehreren Bilder und des einen oder der mehreren zusätzlichen Bilder basierend auf dem berechneten dichten optischen Fluss;
wobei optional das Modifizieren des einen oder der mehreren Bilder und des einen oder der mehreren zusätzlichen Bilder basierend auf dem berechneten dichten optischen Fluss Folgendes beinhaltet:
Fließenlassen eines Bilds, das von der ersten Bilderfassungsvorrichtung (110) empfangen wird, basierend auf dem berechneten dichten optischen Fluss, um eine horizontale Disparität (410, 420) zwischen dem Bild und einem zusätzlichen Bild um einen Faktor zu erhöhen, der ein Verhältnis einer Konstante zu einem absoluten Wert eines Kosinus eines horizontalen Azimutwinkels weg von einer Normalen zu einer Linie zwischen der ersten Bilderfassungsvorrichtung (110) und der zweiten Bilderfassungsvorrichtung (120) ist, für unterschiedliche Stellen in einer spezifischen Tiefe relativ zu der Bilderfassungsvorrichtung; und
Austauschen von Abschnitten des Bilds, die Stellen hinter einer Bezugsebene, die die erste Bilderfassungsvorrichtung (110) und die zweite Bilderfassungsvorrichtung (120) umfasst, entsprechen, gegen Abschnitte des zusätzlichen Bilds, die Stellen hinter der Bezugsebene entsprechen.

12. Verfahren gemäß Anspruch 7, wobei das Erzeugen eines oder mehrerer equirektangulärer Bilder durch das Kombinieren der ausgeglichenen ausgerichteten Bilder und der ausgeglichenen ausgerichteten zusätzlichen Bilder Folgendes beinhaltet:
Entfernen der zweiten Bilderfassungsvorrichtung (120) aus einem Bild, das durch die erste Bilderfassungsvorrichtung (110) erfasst wird;
wobei optional das Entfernen der zweiten Bilderfassungsvorrichtung (120) aus dem Bild, das durch die erste Bilderfassungsvorrichtung (110) erfasst wird, Folgendes beinhaltet:
Ersetzen eines Abschnitts des Bilds, das durch die erste Bilderfassungsvorrichtung (110) erfasst wird, das horizontale Azimutwinkel weg von einer Normalen zu einer Linie zwischen der ersten Bilderfassungsvorrichtung (110) und der zweiten Bilderfassungsvorrichtung (120) und senkrecht zu der ersten Bilderfassungsvorrichtung (110) und der zweiten Bilderfassungsvorrichtung (120) innerhalb eines spezifischen Bereichs aufweist, durch einen Abschnitt eines zusätzlichen Bilds, das horizontale Azimutwinkel weg von einer Normalen zu einer Linie zwischen der ersten Bilderfassungsvorrichtung (110) und der zweiten Bilderfassungsvorrichtung (120) und senkrecht zu der ersten Bilderfassungsvorrichtung (110) und der zweiten Bilderfassungsvorrichtung (120) innerhalb des spezifischen Bereichs aufweist.

## Revendications

1. Un système comprenant :
un premier dispositif de capture d'image (110) couplé à un élément de raccordement (130), le premier dispositif de capture d'image (110) étant configuré pour capturer des images d'un champ de vision à 360 degrés entourant le premier dispositif de capture d'image (110) ;
un deuxième dispositif de capture d'image (120) couplé à l'élément de raccordement (130) de sorte que le premier dispositif de capture d'image (110) et le deuxième dispositif de capture d'image (120) soient dans un plan commun parallèle à l'élément de raccordement (130), le deuxième dispositif de capture d'image (120) étant configuré pour capturer des images d'un champ de vision à 360° entourant le deuxième dispositif de capture d'image (120) ; et
une unité de commande (140) couplée au premier dispositif de capture d'image (110) et au deuxième dispositif de capture d'image (120), l'unité de commande (140) étant configurée pour :
recevoir des images capturées par le premier dispositif de capture d'image (110) ;
recevoir des images supplémentaires capturées par le deuxième dispositif de capture d'image (120) ;
aligner des images capturées par le premier dispositif de capture d'image (110) avec des images supplémentaires capturées par le deuxième dispositif de capture d'image (120), où aligner des images capturées par le premier dispositif de capture d'image (110) avec des images supplémentaires capturées par le deuxième dispositif de capture d'image (120) comprend :
déterminer une rotation à appliquer à une image capturée par le premier dispositif de capture d'image (110) de sorte que l'image soit dans un système de coordonnées parallèle avec une image supplémentaire capturée par le deuxième dispositif de capture d'image (120), où déterminer la rotation à appliquer à l'image capturée par le premier dispositif de capture d'image (110) comprend :
mapper l'image en une carte cubique (*cubemap*) ;
mapper l'image supplémentaire en une carte cubique supplémentaire ;
identifier des caractéristiques à l'intérieur de la carte cubique et des emplacements à l'intérieur de la carte cubique correspondant à chacune des caractéristiques identifiées ;
déterminer des emplacements dans la carte cubique supplémentaire correspondant à chacune des caractéristiques identifiées à l'intérieur de la carte cubique ; et
déterminer une transformation expliquant une quantité maximale d'emplacements de caractéristiques à l'intérieur de la carte cubique et de leurs emplacements correspondants dans la carte cubique
supplémentaire ; et
faire subir une rotation à l'image supplémentaire de sorte qu'une version ayant subi une rotation de l'image supplémentaire soit dans le système de coordonnées parallèle avec l'image par application de la rotation à l'image supplémentaire ;
égaliser une disparité horizontale (410, 420) entre les images alignées capturées par le premier dispositif de capture d'image (110) et les images supplémentaires capturées par le deuxième dispositif de capture d'image (120) ; et
générer une ou plusieurs images équirectangulaires par combinaison des images alignées égalisées et des images supplémentaires alignées égalisées.

2. Le système de la revendication 1, où la transformation inclut la rotation et une translation, et où déterminer la rotation à appliquer à l'image capturée par le premier dispositif de capture d'image (110) comprend en outre :
extraire la rotation à partir de la transformation et rejeter la translation de la transformation.

3. Le système de la revendication 1, où aligner l'image capturée par le premier dispositif de capture d'image (110) avec l'image supplémentaire capturée par le deuxième dispositif de capture d'image (120) comprend en outre :
flouter l'image et la version ayant subi une rotation de l'image supplémentaire à l'aide d'un filtre passe-bas.

4. Le système de la revendication 1, où égaliser la disparité horizontale (410, 420) entre les images capturées par le premier dispositif de capture d'image (110) et les images supplémentaires capturées par le deuxième dispositif de capture d'image (120) comprend :
identifier une image capturée par le premier dispositif de capture d'image (110) d'un emplacement derrière un plan de référence incluant le premier dispositif de capture d'image (110) et le deuxième dispositif de capture d'image (120) ;
identifier une image supplémentaire capturée par le deuxième dispositif de capture d'image (120) de l'emplacement derrière le plan de référence ; et
échanger l'image et l'image supplémentaire.

5. Le système de la revendication 1, où égaliser la disparité horizontale (410, 420) entre les images capturées par le premier dispositif de capture d'image (110) et les images supplémentaires capturées par le deuxième dispositif de capture d'image (120) comprend :
calculer un flux optique dense d'une ou de plusieurs images capturées par le premier dispositif de capture d'image (110) à une ou plusieurs images supplémentaires capturées par le deuxième dispositif de capture d'image (120) et de ces une ou
plusieurs images supplémentaires capturées par le deuxième dispositif de capture d'image (120) à ces une ou plusieurs images capturées par le premier dispositif de capture d'image (110) ; et
modifier ces une ou plusieurs images et ces une ou plusieurs images supplémentaires sur la base du flux optique dense calculé ;
facultativement où la modification de ces une ou plusieurs images et de ces une ou plusieurs images supplémentaires sur la base du flux optique dense calculé comprend : déformer une image capturée par le premier dispositif de capture d'image (110) sur la base du flux optique dense calculé afin d'augmenter une disparité horizontale (410, 420) entre l'image et une image supplémentaire d'un facteur qui est un rapport d'une constante à une valeur absolue d'un cosinus d'un angle d'azimut horizontal par rapport à une normale à une ligne entre le premier dispositif de capture d'image (110) et le deuxième dispositif de capture d'image (120) pour différents emplacements à une profondeur spécifique relativement au premier dispositif de capture d'image (110) ; et échanger des portions de l'image correspondant à des emplacements derrière un plan de référence incluant le premier dispositif de capture d'image (110) et le deuxième dispositif de capture d'image (120) avec des portions de l'image supplémentaire correspondant à des emplacements derrière le plan de référence.

6. Le système de la revendication 1, où générer une ou plusieurs images équirectangulaires par combinaison des images alignées égalisées et des images supplémentaires alignées égalisées comprend :
retirer le deuxième dispositif de capture d'image (120) d'une image capturée par le premier dispositif de capture d'image (110) ;
facultativement où retirer le deuxième dispositif de capture d'image (120) d'une image capturée par le premier dispositif de capture d'image (110) comprend :
identifier un emplacement de début à l'intérieur d'une image supplémentaire capturée par le premier dispositif de capture d'image (110) correspondant à un emplacement dans l'image à l'intérieur d'une plage spécifique d'angles d'azimut horizontaux par rapport à une normale à une ligne entre le premier dispositif de capture d'image (110) et le deuxième dispositif de capture d'image (120) et à angle droit du premier dispositif de capture d'image (110) et du deuxième dispositif de capture d'image (120) ;
la détermination d'un emplacement dans l'image capturée par le premier dispositif de capture d'image (110) correspondant à l'emplacement de début à l'intérieur de l'image supplémentaire ;
la détermination d'un emplacement de fin dans l'image capturée par le premier dispositif de capture d'image (110) ayant un angle d'azimut horizontal par rapport à la normale à la ligne entre le premier dispositif de capture d'image (110) et le deuxième dispositif de capture d'image (120) et à angle droit du premier dispositif de capture d'image (110) et du deuxième dispositif de capture d'image (120) à l'intérieur de la plage spécifique ; et
la modification de l'image par rééchantillonnage de pixels entre l'emplacement dans l'image et l'emplacement de fin dans l'image et remplissage de pixels le long d'une ligne dans l'image entre l'emplacement et l'emplacement de fin sur la base du rééchantillonnage ; et/ou
facultativement où retirer le deuxième dispositif de capture d'image (120) de l'image capturée par le premier dispositif de capture d'image (110) comprend :
remplacer une portion de l'image capturée par le premier dispositif de capture d'image (110) ayant des angles d'azimut horizontaux par rapport à une normale à une ligne entre le premier dispositif de capture d'image (110) et le deuxième dispositif de capture d'image (120) et à angle droit du premier dispositif de capture d'image (110) et du deuxième dispositif de capture d'image (120) à l'intérieur d'une plage spécifique par une portion d'une image supplémentaire ayant des angles d'azimut horizontaux par rapport à une normale à une ligne entre le premier dispositif de capture d'image (110) et le deuxième dispositif de capture d'image (120) et à angle droit du premier dispositif de capture d'image (110) et du deuxième dispositif de capture d'image (120) à l'intérieur de la plage spécifique.

7. Un procédé comprenant :
la réception d'images en provenance d'un premier dispositif de capture d'image (110) couplé à un élément de raccordement (130), les images décrivant un champ de vision à 360 degrés entourant le premier dispositif de capture d'image (110) ;
la réception d'images supplémentaires en provenance d'un deuxième dispositif de capture d'image (120) couplé à l'élément de raccordement (130) de sorte que le premier dispositif de capture d'image (110) et le deuxième dispositif de capture d'image (120) soient dans un plan commun parallèle à l'élément de raccordement (130), les images supplémentaires décrivant un champ de vision à 360° entourant le deuxième dispositif de capture d'image (120) ;
l'alignement d'images reçues en provenance du premier dispositif de capture d'image (110) avec des images supplémentaires reçues en provenance du deuxième dispositif de capture d'image (120), où l'alignement d'images reçues en provenance du premier dispositif de capture d'image (110) avec des images supplémentaires reçues en provenance du deuxième dispositif de capture d'image (120) comprend :
la détermination d'une rotation à appliquer à une image reçue en provenance du premier dispositif de capture d'image (110) de sorte que l'image soit dans un système de coordonnées parallèle avec une image supplémentaire reçue en provenance du deuxième dispositif de capture d'image (120), où déterminer la rotation à appliquer à l'image capturée par le premier dispositif de capture d'image (110) comprend :
mapper l'image en une carte cubique ;
mapper l'image supplémentaire en une carte cubique supplémentaire ;
identifier des caractéristiques à l'intérieur de la carte cubique et des emplacements à l'intérieur de la carte cubique correspondant à chacune des caractéristiques identifiées ;
déterminer des emplacements dans la carte cubique supplémentaire correspondant à chacune des caractéristiques identifiées à l'intérieur de la carte cubique ; et
déterminer une transformation expliquant une quantité maximale d'emplacements de caractéristiques à l'intérieur de la carte cubique et de leurs emplacements correspondants dans la carte cubique
supplémentaire ; et
la rotation de l'image supplémentaire de sorte qu'une version ayant subi une rotation de l'image supplémentaire soit dans le système de coordonnées parallèle
avec l'image par application de la rotation à l'image supplémentaire ;
l'égalisation d'une disparité horizontale (410, 420) entre les images alignées reçues en provenance du premier dispositif de capture d'image (110) et les images supplémentaires reçues en provenance du deuxième dispositif de capture d'image (120) ; et
la génération d'une ou de plusieurs images équirectangulaires par combinaison des images alignées égalisées et des images supplémentaires alignées égalisées.

8. Le procédé de la revendication 7, où la transformation inclut la rotation et une translation, et où la détermination de la rotation à appliquer à l'image reçue en provenance du premier dispositif de capture d'image (110) comprend en outre : l'extraction de la rotation à partir de la transformation et le rejet de la translation de la transformation.

9. Le procédé de la revendication 7, où l'alignement de l'image reçue en provenance du premier dispositif de capture d'image (110) avec l'image supplémentaire reçue en provenance du deuxième dispositif de capture d'image (120) comprend en outre : le floutage de l'image et de la version ayant subi une rotation de l'image supplémentaire à l'aide d'un filtre passe-bas.

10. Le procédé de la revendication 7, où l'égalisation de la disparité horizontale (410, 420) entre les images reçues en provenance du premier dispositif de capture d'image (110) et les images supplémentaires reçues en provenance du deuxième dispositif de capture d'image (120) comprend :
l'identification d'une image d'un emplacement derrière un plan de référence incluant le premier dispositif de capture d'image (110) et le deuxième dispositif de capture d'image (120) reçue en provenance du premier dispositif de capture d'image (110) ;
l'identification d'une image supplémentaire de l'emplacement derrière le plan de référence reçue en provenance du deuxième dispositif de capture d'image (120) ; et
l'échange de l'image et de l'image supplémentaire.

11. Le procédé de la revendication 7, où l'égalisation de la disparité horizontale (410, 420) entre les images reçues en provenance du premier dispositif de capture d'image (110) et les images supplémentaires reçues en provenance du deuxième dispositif de capture d'image (120) comprend :
le calcul d'un flux optique dense d'une ou de plusieurs images reçues en provenance du premier dispositif de capture d'image (110) à une ou plusieurs images supplémentaires reçues en provenance du deuxième dispositif de capture d'image (120) et de ces une ou plusieurs images supplémentaires reçues en provenance du deuxième dispositif de capture d'image (120) à ces une ou plusieurs images reçues en provenance du premier dispositif de capture d'image (110) ; et
la modification de ces une ou plusieurs images et de ces une ou plusieurs images supplémentaires sur la base du flux optique dense calculé ;
facultativement où la modification de ces une ou plusieurs images et de ces une ou plusieurs images supplémentaires sur la base du flux optique dense calculé comprend : la déformation d'une image reçue en provenance du premier dispositif de capture d'image (110) sur la base du flux optique dense calculé afin d'augmenter une disparité horizontale (410, 420) entre l'image et une image supplémentaire d'un facteur qui est un rapport d'une constante à une valeur absolue d'un cosinus d'un angle d'azimut horizontal par rapport à une normale à une ligne entre le premier dispositif de capture d'image (110) et le deuxième dispositif de capture d'image (120) pour différents emplacements à une profondeur spécifique relativement au dispositif de capture d'image ; et
l'échange de portions de l'image correspondant à des emplacements derrière un plan de référence incluant le premier dispositif de capture d'image (110) et le deuxième dispositif de capture d'image (120) avec des portions de l'image supplémentaire correspondant à des emplacements derrière le plan de référence.

12. Le procédé de la revendication 7, où la génération d'une ou de plusieurs images équirectangulaires par combinaison des images alignées égalisées et des images supplémentaires alignées égalisées comprend :
le retrait du deuxième dispositif de capture d'image (120) d'une image capturée par le premier dispositif de capture d'image (110) ;
facultativement où le retrait du deuxième dispositif de capture d'image (120) de l'image capturée par le premier dispositif de capture d'image (110) comprend :
le remplacement d'une portion de l'image capturée par le premier dispositif de capture d'image (110) ayant des angles d'azimut horizontaux par rapport à une normale à une ligne entre le premier dispositif de capture d'image (110) et le deuxième dispositif de capture d'image (120) et à angle droit du premier dispositif de capture d'image (110) et du deuxième dispositif de capture d'image (120) à l'intérieur d'une plage spécifique par une portion d'une image supplémentaire ayant des angles d'azimut horizontaux par rapport à une normale à une ligne entre le premier dispositif de capture d'image (110) et le deuxième dispositif de capture d'image (120) et à angle droit du premier dispositif de capture d'image (110) et du deuxième dispositif de capture d'image (120) à l'intérieur de la plage spécifique.
